# EUROPEAN PATENT SPECIFICATION

(11) **EP 4 152 773 B1**
(45) Date of publication and mention of the grant of the patent: **29.10.2025**
(21) Application number: 21197347.4
(22) Date of filing: 17.09.2021
(51) Int. Cl.: H04W 4/02, H04W 4/48, H04W 4/80

(54) **CONTROL UNIT FOR IMPROVING A BLUETOOTH CONNECTION PROCESS, METHOD AND COMPUTER PROGRAM**
STEUEREINHEIT ZUR VERBESSERUNG EINES BLUETOOTH-VERBINDUNGSPROZESSES, VERFAHREN UND COMPUTERPROGRAMM
UNITÉ DE COMMANDE POUR AMÉLIORER UN PROCESSUS DE CONNEXION BLUETOOTH, PROCÉDÉ ET PROGRAMME INFORMATIQUE

(43) Date of publication of application: 22.03.2023
(73) Proprietor: Bayerische Motoren Werke Aktiengesellschaft, 80809 München (DE)
(72) Inventor: Zaki, Tarek, 81829 München (DE)

(56) References cited:
- WO-A1-2017/075386
- US-A1- 2018 060 253
- US-A1- 2020 073 618

## Description

### Field

The present disclosure relates to the field of Bluetooth communication. Embodiments relate to a control unit for improving a Bluetooth connection process, a method and a computer program.

### Background

Modem vehicles are equipped with a plurality of infotainment-system. To establish a connection with a user equipment, e.g., a smartphone to one of these infotainment devices the user may be required to select the desired infotainment device in a menu, e.g., a Bluetooth menu of the user equipment. This process may be cumbersome and not user friendly, not mentioning that, despite being forbidden, causing significant road safety danger if performed while driving. Thus, there may be a need to provide an improved way to establish a connection between the user equipment and an infotainment-system of the plurality of infotainment devices. This need may arise particularly in relation to different positions of the user equipment inside/around the vehicle.

US 2018 / 060 253 A1 discloses an input device, which may be automatically paired with a display device within a vehicle infotainment system. Pairing of the input device and the display device may involve little or no action on the part of the user. Instead, the vehicle infotainment system is capable of performing pairing, e.g., decide when to pair and which display device to pair with a particular input device, largely based on contextual cues.

WO 2017 / 075 386 A1 discloses a method for in-vehicle location using an in-vehicle content sharing system. The method comprises determining the seating positions of the occupants in vehicle using a first sensor and determining the relative positions of user devices in the vehicle using a second sensor. Further, the method comprises determining the identity of the occupant in each seating position and determining a proper operation status for each display panel. Further, the method comprises pairing operating display panels with respective user devices based on the seating positions of the occupants and the relative positions of user devices.

### Summary

A user experience and a safety for a driver can be significantly increased by automatically identifying which (in-vehicle) infotainment device is likely relevant for a user's user equipment (e.g. smartphone, head-/earphones, game-console controller, etc.). For example, this relevant infotainment device may depend on the device's location. Accordingly, pairing of the user equipment with a desired infotainment device may be eased by determining a most relevant infotainment device.

It is therefore a finding that a Bluetooth connection process can be improved by determining a position of the user equipment, determining a position of a nearest infotainment device and transmitting information to both devices to enable them to establish a connection. Thus, a Bluetooth pairing process can be eased, for example. Accordingly, pairing of the user equipment and the infotainment device may be quick and convenient for the user, e.g., even if the user may exchange seats or user equipment.

The object of the invention is achieved by the subject-matter of the independent claims. Advantageous embodiments are defined in the dependent claims. Further examples are provided for facilitating the understanding of the invention.

### Brief description of the Figures

Some examples of apparatuses and/or methods will be described in the following by way of example only, and with reference to the accompanying figures, in which
Fig. 1 shows a block diagram of an example of a control unit;
Fig. 2 shows a schematic top view of a vehicle;
Fig. 3 shows a schematic top view of another vehicle;
Fig. 4 shows an example of expanding a content of a display of user equipment; and
Fig. 5 shows an example of a method.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an 'or', this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

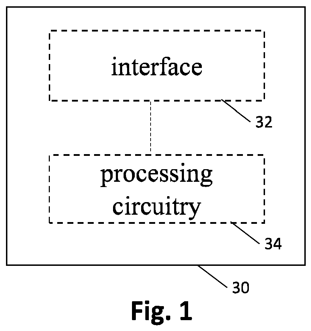

Fig. 1 shows a block diagram of an example of a control unit 30. The control unit 30 is for improving a Bluetooth connection process between user equipment and an infotainment device of a plurality of infotainment devices. The control unit 30 comprises one or more interfaces 32 configured to communicate with the user equipment and the infotainment device and processing circuitry 34 configured to control the one or more interfaces 32. The processing circuitry 34 is configured to obtain a position of the user equipment and to determine a nearest infotainment device of a plurality of infotainment devices to the user equipment. Further, the processing circuitry 34 is configured to transmit information to the user equipment and the nearest infotainment device in a line-of-sight to enable both to establish a connection with each other. Thus, the user equipment and the infotainment device can establish a connection based on the received information. For example, the control unit 30 may transmit information to omit a pairing process between the user equipment and the infotainment device, such that the user equipment can establish a connection with the infotainment without further measures. For example the control unit 30 may transmit information to the user equipment indicating to terminate a connection of the user equipment with a first infotainment device and to establish a connection with a second infotainment device, because the second infotainment device may increase a user's experience.

The position information of the user equipment can be obtained by receiving the information, e.g., from a relaying system, an occupation sensor, etc. For example, the control unit 30 may be connected to a relaying system and the relaying system may be connected to the user equipment and thus may know the position of the user equipment. Thus, the control unit 30 may receive information about the position of the user equipment from the relaying system. Further, the control unit 30 may be connected to a charging pod for a user equipment and if a user equipment is stowed in the charging pod the control unit 30 may receive information from the charging pod that the user equipment is stowed in the charging pod. For example, the control unit 30 may receive position information about the user equipment from at least one infotainment device of the plurality of infotainment devices.

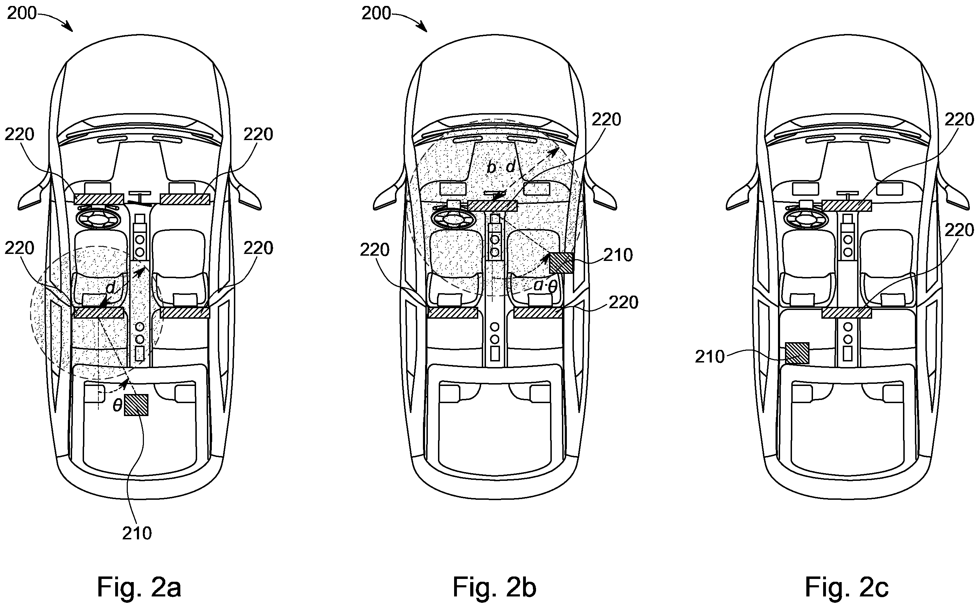

The position information of the user equipment can be obtained by determining based on a received signal of the user equipment. In an example, the determination of the nearest infotainment device is based on at least one communication channel parameter and/or information received from an occupation sensor. A communication parameter may be an angle of arrival (AoA), an angle of departure (AoD), a received signal strength indicator (RSSI), etc. of a signal used for Bluetooth communication (see Fig. 2), radio communication (e.g., neighbor cell search) etc. For example, the control unit 30 may receive a Bluetooth signal from the user equipment and may determine based on a characteristic of this Bluetooth signal the position of the user equipment.

Optionally or alternatively, the position information can be received from an occupation sensor of a vehicle. For example, an occupation sensor such like an in-seat force sensor, a door opening sensor, etc. may determine a presence of a user, e.g., at a front seat. Thus, the control unit 30 may determine the nearest infotainment device by selecting an infotainment device assigned to the front seat. This way, a determination of the nearest infotainment can be eased. This may be especially beneficial if only one user (leading to a receiving of information from only occupation sensor or a plurality of occupation sensors assigned to the same infotainment device) enters/uses the vehicle.

Optionally, the information received from the occupation sensor can be used to enable a pairing process, e.g., for a predefined time. For example, a passenger may enter a vehicle and may take a seat in the back. Thus, an occupation sensor (in-seat-force sensor, door opening sensor) may detect the presence of the passenger and may transmit information to the control unit 30. The control unit 30 may transmit information to enable each user equipment inside of the vehicle and the infotainment device assigned to the occupation sensor to establish a connection, e.g., without performing a pairing process. For example, a user equipment of the driver may be already connected to another infotainment device or a Bluetooth receiver may be turned off and thus only a user equipment of the passenger may listen to the information transmitted from the control unit 30. This way, the user equipment of the passenger may establish a connection to the nearest (assigned) infotainment device in an improved way. The control unit 30 may transmit this information only for a predetermined time. For example, the driver may enter the vehicle and an occupation sensor may transmit information to the control unit 30, enabling the control unit 30 to determine the nearest infotainment device (the assigned infotainment device to this occupation sensor). Thus, the control unit 30 may transmit information to enable the user equipment and the nearest infotainment device to establish a connection for a predefined time. Alternatively, the predefined time may be linked to a trigger event, e.g., until another occupation sensor (such like a door opening sensor) transmits information, indicating an entering of a passenger.

The nearest infotainment device in a line-of-sight means that a front side of the nearest infotainment device may be visible from the position of the use equipment. The front side of the infotainment device may be used to provide infotainment content to a user of the user equipment.

The nearest infotainment device of a plurality of infotainment devices (in a line-of-sight) can be determined based on a database of the control unit 30 and the position of the user equipment. For example, the control unit 30 may know the position and orientation of each infotainment device of the plurality of infotainment devices and thus by obtaining the position of the user equipment the control unit 30 can determine the nearest infotainment device.

Optionally, at least one infotainment device may be movable. Thus, the control unit 30 may determine that a movable (and unused) infotainment device is the nearest infotainment device relative to the position of the user equipment even if an actual orientation is not in a line-of-sight to the user equipment. Since the control unit 30 knows that an orientation of the infotainment device can be adjusted so that the infotainment device is the nearest infotainment in a line-of-sight to the user equipment.

The transmitted information may comprise information to establish a Bluetooth connection between the user equipment and the nearest infotainment device, for example. Thus, a (initial) pairing process can be eased or even omitted. Additionally, the transmitted information may comprise information that an actual used infotainment device is not the nearest infotainment device and that a connection to this infotainment device shall be terminated, for example. Thus, the user equipment may establish a connection to the nearest infotainment device after terminating the connection with the actual infotainment device. Thus, a termination of an existing connection and correspondingly an establishing of a new connection can be improved.

For example, the transmitted information may be utilized to show the nearest infotainment device as a first option on a Bluetooth setting during a first/initial connection process, e.g., an initial pairing. Additionally, the user equipment may be automatically connected to the nearest infotainment device from a second connection process with the same infotainment device on.

Optionally, the transmitted information may comprise information that an actual used infotainment device is not in a line-of-sight to the user equipment and thus that a connection should be terminated, which may enable the user equipment to search for another infotainment device.

In an example, the processing unit 34 may be further configured to generate information about a relative position of the user equipment relative to the nearest infotainment device and to transmit the information about the relative position to the user equipment and/or the nearest infotainment device. Thus, the user equipment can be informed about a relative position to the nearest infotainment device, e.g., if the user equipment is not capable to determine the relative position on its own or to reduce a power consumption, data traffic, etc. of the user equipment.

Optionally or alternatively, the infotainment device can be informed about a relative position of the use equipment, since the infotainment device may be not capable to determine the relative position.

For example, a synchronization between both the user equipment and the nearest infotainment device can be increased since both devices may receive the same information. Thus, a deviation can be prevented (e.g., the user equipment may determine a different relative position as the infotainment device or the control unit 30) which may increase a user experience

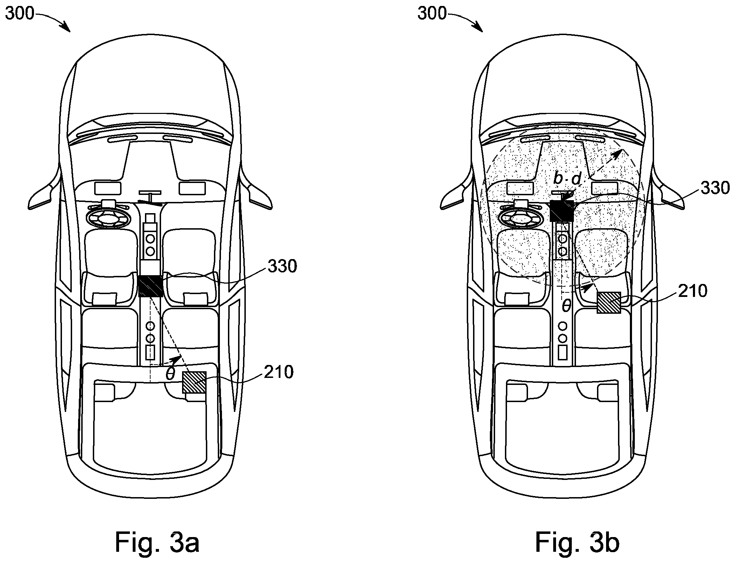

An infotainment device may be an information display, a co-driver entertainment display, a door pod, a heads-up display, a rear-system entertainment display, etc. Some vehicles equip discrete smart displays for entertainment (see Fig. 2), while others equip a central entertainment electronic control unit box (see Fig. 3). Therefore, the following two Figs. present embodiments for each architecture.

As shown in Fig. 1 the respective one or more interfaces 32 are coupled to the respective processing circuitry 34 at the control unit 30. In embodiments the processing circuitry 34 may be implemented using one or more processing units, one or more processing devices, any means for processing, such as a processor, a computer or a programmable hardware component being operable with accordingly adapted software. Similar, the described functions of the processing circuitry 34 may as well be implemented in software, which is then executed on one or more programmable hardware components. Such hardware components may comprise a general-purpose processor, a Digital Signal Processor (DSP), a micro-controller, etc. The processing circuitry 34 is capable of controlling the interface 32, so that any data transfer that occurs over the interface and/or any interaction in which the interface may be involved may be controlled by the processing circuitry 34.

In an embodiment the control unit 30 may comprise a memory and at least one processor 34 operably coupled to the memory and configured to perform the below mentioned method.

In examples the one or more interfaces 32 may correspond to any means for obtaining, receiving, transmitting or providing analog or digital signals or information, e.g. any connector, contact, pin, register, input port, output port, conductor, lane, etc. which allows providing or obtaining a signal or information. An interface may be wireless or wireline and it may be configured to communicate, e.g., transmit or receive signals, information with further internal or external components. The one or more interfaces 32 may comprise further components to enable communication between vehicles. Such components may include transceiver (transmitter and/or receiver) components, such as one or more Low-Noise Amplifiers (LNAs), one or more Power-Amplifiers (PAs), one or more duplexers, one or more diplexers, one or more filters or filter circuitry, one or more converters, one or more mixers, accordingly adapted radio frequency components, etc.

More details and aspects are mentioned in connection with the embodiments described above or below. The example shown in Fig. 1 may comprise one or more optional additional features corresponding to one or more aspects mentioned in connection with the proposed concept or one or more examples described below (e.g., Fig. 2 - 4).

Fig. 2 shows a schematic top view of a vehicle 200. The vehicle 200 may comprise the control unit as described with reference to Fig. 1, e.g., a control unit may be integrated into at least one of the infotainment devices 220. In an example, at least one infotainment device 220 may comprise a control unit as described with reference to Fig. 1. Further, the vehicle 200 comprises a plurality of infotainment devices 220. Inside of the vehicle200 may be user equipment 210 positioned.

A 0-degree of the user equipment AoA may be face front and perpendicular to the front side of each infotainment device 220, e.g., a display of the infotainment device 220. For example, a Bluetooth module may be mounted at a center of each front side of the infotainment device 220 (These is a convention for simplification and symmetry. Any displacement and/or arrangement of the Bluetooth module can be geometrically/mathematically compensated.). A position of the user equipment 210 relative to the infotainment device 220 (and thus the control unit) may be determined by a distance *d* and an angle *θ*.

As described above the position of the user equipment 210 may be determined by Bluetooth signals, for example. The nearest infotainment device 220 may be determined as followed (in Fig. 2a the nearest infotainment device 220 is on the assigned to the left back seat, in Fig. 2b assigned to the front seats and in Fig. 2c assigned to the rear seats).

If *θ <* ±*x* (if an infotainment device serves one seat, see Fig. 2a) or *θ <* ±*a * x* (if an infotainment device serves two seats, see Fig. 2b (front seats), 2c (front and back seats)), and if *d < y* meters (if an infotainment device serves one seat, see Fig. 2a) or *d < b* * *y* meters (if an infotainment device serves two seats, see Fig. 2b (front seats), 2c (front and back seats)), where *a, b, x, y* depend on the vehicle's geometry, *θ* is the Bluetooth AoA, *d* is an estimated distance derived e.g. from a Bluetooth RSSI.

While the equations above use AoA and RSSI as an example other parameter may be used. For example, an accuracy of reliability of the system may be increased by using other Bluetooth-features, such as proximity, fingerprinting, time differential alteration, angle of departure, etc.

For example, only one infotainment device 220 may comprise the control unit. However, the infotainment devices 220 may communicate with each other. This way, the information determined by the control unit of one infotainment device 220 can be shared among all infotainment devices 220. This way, a production cost of the infotainment device 220 may be reduced. For example, the control unit may be integrated into an electronic control unit (ECU) box (as described with reference to Fig. 3).

Furthermore, (even if just only one infotainment device 220 may be equipped with a control unit,) an architecture of determining the nearest infotainment device 220 can be designed in a way that infotainment devices 220 exchange the determined position information of the user equipment 210, e.g. Bluetooth signals. Accordingly, the algorithm for pairing and nearest infotainment device association can be more reliable using e.g. delta-distance and delta-AoA measurements, accordingly which may significantly reduce a false-positive and a false-negative rate. Optionally, the control unit may be designed to rely exclusively only on either *d* or *θ*, thereby reducing the complexity of the calculations and probably increasing the algorithm's speed.

In an example, an infotainment system comprises a control unit (as described with reference to Fig. 1) and at least one infotainment device 220. Further, the infotainment device 220 comprises at least one sensor to determine a movement of the at least one infotainment device 220. The control unit is further configured to receive movement data from the user equipment 210 and movement data from the at least one infotainment device 220 and to compare the movement data from the user equipment 210 and from the at least one infotainment device 220. Further, if the movement data of the user equipment 210 and the infotainment device 220 match each other the control unit is further configured to establish a connection between the user equipment 210 and the at least one infotainment device 220. Thus, a connection between the user equipment 210 and an infotainment device 220 may be eased. The sensor may be any sensor capable to detect an acceleration of the infotainment device 220, e.g., an accelerator, a gyroscope, etc.

Matching of the movement data of the user equipment 210 and the infotainment device 220 does not necessarily mean that the movement data is identical. For example, the movement data may differ by a value below a threshold and thus the movement data may be considered to match.

In an example, comparing the movement data may be done by checking the movement data for a trigger event. A trigger event may be caused by a user of the user equipment210, e.g., by tapping the user equipment 210 against the infotainment device 220. For example, a trigger event may be an acceleration for a minimum time (e.g., comparable to a long pressure touch on a smartphone display) or multiple taps one after each other (e.g., a double tap).

For example, for a double tap two characteristic peaks in the movement data may be generated, which can be identified by a time difference between both peaks. Thus, if the movement data of the user equipment 210 and the movement of the infotainment device 220 comprises both two peaks with the (nearly) same time difference the control unit identify the movement data as matching and may establish a connection between the user equipment 210 and the infotainment device 220.

For example, the user equipment 210 may be already connected to an infotainment device 220 and the user would like to just rapidly exchange this paring to another infotainment device 220 in the same vehicle 200. Utilizing the infotainment device 220, which comprises the sensor for determination of a movement a switch can be performed in an eased way. For example, each infotainment device 220 may comprise a sensor to determine a movement. The infotainment devices 220 may exchange integrated sensor data (e.g., accelerometer and/or gyroscope sensor data) and user equipment's Bluetooth-module data with each other's via a control unit (e.g., through an ECU box). Therefore, when the single connected user equipment 210 experiences a double tap on any of the infotainment devices 220, the user equipment pairing connection switches accordingly because the vehicle 200 can know from the integrated sensors which infotainment device 220has currently been double tapped.

However, a more challenging situation is when 2 or more infotainment devices 220 are connected in the vehicle 200. In order to switch between the paired infotainment devices 220, the vehicle 200 needs not only the integrated sensor data (e.g., accelerometer and/or gyroscope sensor data) but also an identifier from the user equipment 210 which did the double-tab. In this case, the user equipment 210 can install a dedicated application to enable sending to the vehicle 200 either of the following. Either a flag (optionally with a timestamp) when the user equipment 210 is double-tapped or its sensor data when the user equipment is double-tapped. The latter may useful when several user equipment 210 potentially get tapped simultaneously inside the vehicle 200. In this case, unique features can be extracted from the exchanged motion-sensor data, such as the delta-time duration between the two tabs, to distinguish between several user equipment 210. Delta-time durations may be better than absolute time values because it is very likely that there will be a discrepancy between the user equipment 210 and infotainment device's clocks.

More details and aspects are mentioned in connection with the embodiments described above and/or below. The example shown in Fig. 2 may comprise one or more optional additional features corresponding to one or more aspects mentioned in connection with the proposed concept or one or more examples described above (e.g., Fig. 1) and/or below (e.g., Fig. 3 - 4).

Fig. 3 shows a schematic top view of another vehicle 300. The vehicle 300 may comprise the control unit 330 as described with reference to Fig. 1, e.g., the control unit 330 may be an electronic control unit (ECU) box of the vehicle 300.

The ECU box may broadcast infotainment content to (passive) display inside the vehicle 300 assigned to different places, e.g., a driver, co-driver, rear-seat passenger location. As can be seen in Fig. 3a the ECU box may be positioned in the middle of the vehicle 300. For example, if the ECU box is positioned in the middle of the vehicle 300 the user equipment 210 may be located using only *θ* (e.g., BT angle of arrival).

As can be seen in Fig. 3b the ECU box may be positioned at a central information display (CID). For example, the position of the user equipment 210 may be determined utilizing the distance *d* to distinguish between the front and rear seats, and the *θ* to distinguish between right and left seats.

In an example the vehicle 300, comprises a control unit as described with respect to Fig. 1 (e.g., integrated into an infotainment device as described with reference to Fig. 2) and an occupation sensor. The control unit is further configured to determine a nearest infotainment device in a line-of-sight to a user of the user equipment 210 based on information received from the occupation sensor.

If a vehicle may be occupied with one user, it may be easy to identify which is the relevant infotainment device that the user equipment 210 shall be quickly associated to. It is not necessarily the case that this user is always the driver because that same driver might wish in some scenarios to sit at the back seat and enjoy the rear-seat entertainment (RSE) system during for example charging his/her electric vehicle at the station. Therefore, quick pairing of the devices can be achieved in this case by a very simply if-then-else algorithm from the occupation sensor (e.g., in-seat force sensor, door opening sensor, etc.).

For example, the vehicle 300 may be a land vehicle, such a road vehicle, a car, an automobile, an off-road vehicle, a motor vehicle, a bus, a robo-taxi, a van, a truck or a lorry. Alternatively, the vehicle 300 may be any other type of vehicle, such as a train, a subway train, a boat or a ship. For example, the proposed concept may be applied to public transportation (trains, bus) and future means of mobility (e.g., robo-taxis).

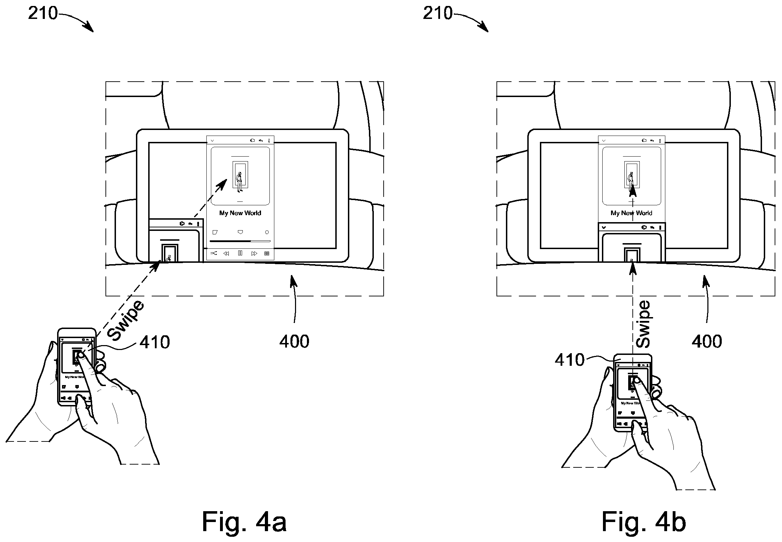

More details and aspects are mentioned in connection with the embodiments described above and/or below. The example shown in Fig. 3 may comprise one or more optional additional features corresponding to one or more aspects mentioned in connection with the proposed concept or one or more examples described above (e.g., Fig. 1 - 2) and/or below (e.g., Fig. 4).

Fig. 4 shows an example of expanding a content of a display of user equipment 410. The content is expanded to a display of the nearest infotainment device 420.

In an example, the user equipment 410, for improving a handling of an infotainment device, comprises a display, one or more interfaces configured to communicate with a nearest infotainment device of a plurality of communication devices in a line-of-sight and a control unit. Further the user equipment 410 comprises processing circuitry configured to receive information about the nearest infotainment device 420 and to obtain information about a relative position of the user equipment relative to the nearest infotainment device. Further the processing circuitry is configured to expand a content of the display of the user equipment 410 by use of the nearest infotainment device 420 in dependence of the obtained information.

For example, a content can be any depiction of information, e.g., a game, an application, a video(stream), a user gesture, a start screen, etc.

For example, a content can be expanded by swiping the content from the user equipment 410 towards the nearest infotainment device 420, e.g., a rear-seat entertainment (RSE) 420. So the RSE 420 may act as an extended display of the user equipment 410 and content can be shared between both. By informing the user equipment 410 and/or the RSE 420 about the relative position of the user equipment as described with reference to Fig. 1 the user equipment 410 and the RSE 420 may be enabled to perform an active, seamless and automatic connection for the expansion. For example, Fig. 4a shows how a content is swiped diagonally and Fig. 4b shows how a content is swiped vertically.

In an example, the processing circuitry of the user equipment 410 may be further configured to receive information from and/or to transmit information to the nearest infotainment device 420, e.g., the RSE 420. This information may be required to provide the expansion of the display, e.g., a synchronization between both devices may be required to expand the content of the display.

An expansion of a content may depend on the relative position of the user equipment 410 to the nearest infotainment device 420, e.g., the content may be expanded in a spatial direction. As can be seen in Fig. 4a and Fig. 4b depending on the relative position of the user equipment 410 a content may be expanded in different ways. For example, in Fig. 4a a user's touch gesture, e.g., a swipe, is performed by the user towards the nearest infotainment system 420 and the content appears on the nearest infotainment device 420 firstly at a left bottom corner, since the user equipment 410 is arranged on a left (bottom) side of the nearest infotainment device 420. In comparison in Fig. 4b the content appears in the middle of the bottom of the nearest infotainment device 420, since the user equipment 410 is arranged in front of the nearest infotainment device 420. Thus, the relative position of the user equipment 410 may be utilized to expand the content in a spatial direction. For example, the user equipment 410 may be arranged on a left side of the nearest infotainment device 420 and a swipe on the user equipment towards the nearest infotainment may lead to a depiction of content on a left of the nearest infotainment device 420. For example, the user equipment 410 may be arranged on a right side of the nearest infotainment device 420 and a swipe on the user equipment towards the nearest infotainment may lead to a depiction of content on a right of the nearest infotainment device 420. This way, different content can be expanded to the nearest infotainment device 420 taken into account a relative position of the user equipment 410.

In an example, the information about the relative position may obtained periodically and expanding the display may be done periodically in dependence of the periodically obtained information.

For example, the user equipment 410 can be located at a projected 360 degrees 2D area around the infotainment device 420.

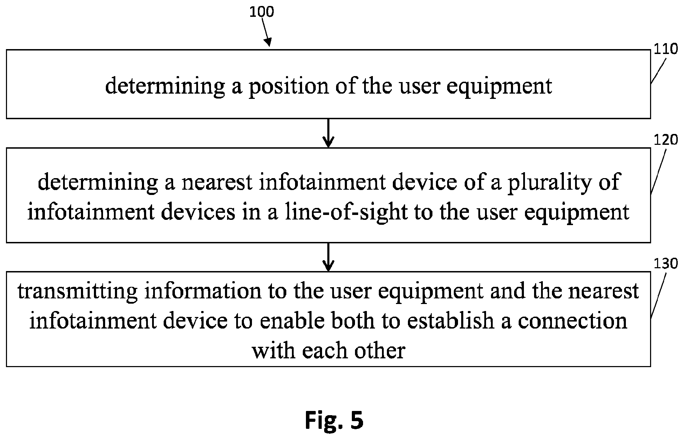

More details and aspects are mentioned in connection with the embodiments described above and/or below. The example shown in Fig. 4 may comprise one or more optional additional features corresponding to one or more aspects mentioned in connection with the proposed concept or one or more examples described above (e.g., Fig. 1 - 3) and/or below (e.g., Fig. 5).

Fig. 5 shows an example of a method 100. The method 100 for improving a Bluetooth connection process comprises determining 110 a position of the user equipment and determining 120 a nearest infotainment device of a plurality of infotainment devices of a plurality of infotainment devices in a line-of-sight to the user equipment. Further, the method 100 comprises transmitting 130 information to the user equipment and the nearest infotainment device to enable both to establish a connection with each other. For example, determining 110, determining 120 and transmitting 130 may be performed by a control unit as described with reference to Fig. 1.

Further, the method 100 may comprise obtaining information about a relative position of the user equipment relative to the nearest infotainment device and expanding a content of the display of the user equipment by use of the nearest infotainment device in dependence of the obtained information. In an example, the method may further comprise obtaining the relative position periodically and expanding the display periodically in dependence of the periodically obtained relative position.

More details and aspects are mentioned in connection with the embodiments described above. The example shown in Fig. 5 may comprise one or more optional additional features corresponding to one or more aspects mentioned in connection with the proposed concept or one or more examples described above (e.g., Fig. 1 - 4).

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, - functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

If some aspects have been described in relation to a device or system, these aspects should also be understood as a description of the corresponding method and vice versa. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example.

## Claims

1. A control unit (30) for improving a Bluetooth connection process between user equipment (210) and an in-vehicle infotainment device (220) of a plurality of in-vehicle infotainment devices (220), comprising:
one or more interfaces (32) configured to communicate with the user equipment (210) and the in-vehicle infotainment device (220); and
processing circuitry (34) configured to control the one or more interfaces (32) and to:
obtain a position of the user equipment (210);
determine a nearest in-vehicle infotainment device of the plurality of in-vehicle infotainment devices (220) in a line-of-sight to the user equipment (210);
transmit information to the user equipment (210) and the nearest in-vehicle infotainment device to enable both to establish a connection with each other;
generate information about a relative position of the user equipment (210) relative to the nearest in-vehicle infotainment device; and
transmit the information about the relative position to the user equipment (210) for expanding a presentation of content on the display of the user equipment (210) by use of the nearest in-vehicle infotainment device.

2. The control unit (30) according to claim 1, wherein
the determination of the nearest in-vehicle infotainment device is based on at least one communication channel parameter and/or information received from an occupation sensor.

3. User equipment (210), for improving a handling of an in-vehicle infotainment device (220), comprising
a display;
one or more interfaces configured to communicate with a nearest in-vehicle infotainment device of a plurality of communication devices in a line-of-sight and a control unit; and
processing circuitry configured to:
receive information about the nearest in-vehicle infotainment device;
obtain information about a relative position of the user equipment (210) relative to the nearest in-vehicle infotainment device; and
expand a presentation of content on the display of the user equipment (210) by use of the nearest in-vehicle infotainment device in dependence of the obtained information.

4. The user equipment (210) according to claim 3, wherein
the information about the relative position is obtained periodically; and
expanding the display is done periodically in dependence of the periodically obtained information.

5. An infotainment system, comprising
a control unit (30) according to any of the claims 1 - 2; and
at least one in-vehicle infotainment device (220), wherein the in-vehicle infotainment device (220) comprises at least one sensor to determine a movement of the at least one in-vehicle infotainment device (220); and
wherein the control unit (30) is further configured to:
receive movement data from the user equipment (210) and movement data from the at least one in-vehicle infotainment device (220);
compare the movement data from the user equipment (210) and from the at least one in-vehicle infotainment device (220); and
if the movement data of the user equipment (210) and the in-vehicle infotainment device (220) match each other establish a connection between the user equipment (210) and the at least one in-vehicle infotainment device (220).

6. The infotainment system according to claim 6, wherein
comparing the movement data is done by checking the movement data for a trigger event.

7. A vehicle, comprising
a control unit (30) according to any of the claims 1 - 2; and/or
an infotainment system according to claim 5 or 6; and
an occupation sensor, wherein
the control unit (30) is further configured to determine a nearest in-vehicle infotainment device in a line-of-sight to a user of the user equipment (210) based on information received from the occupation sensor.

8. A method (100) for improving a Bluetooth connection process, comprising:
determining (110) a position of the user equipment (210);
determining (120) a nearest in-vehicle infotainment device of a plurality of in-vehicle infotainment devices (220) in a line-of-sight to the user equipment (210);
transmitting (130) information to the user equipment (210) and the nearest in-vehicle infotainment device to enable both to establish a connection with each other;
generating information about a relative position of the user equipment (210) relative to the nearest in-vehicle infotainment device; and
transmitting the information about the relative position to the user equipment (210) and/or the nearest in-vehicle infotainment device for expanding a presentation of content on the display of the user equipment (210) by use of the nearest in-vehicle infotainment device.

9. A computer program having a program code for performing the method according to claim 8, when the computer program is executed on a computer, a processor, or a programmable hardware component.

## Patentansprüche

1. Steuereinheit (30) zum Verbessern eines Bluetooth-Verbindungsprozesses zwischen einem Benutzergerät (210) und einer fahrzeuginternen Infotainment-Vorrichtung (220) einer Vielzahl fahrzeuginterner Infotainment-Vorrichtungen (220), die umfasst:
eine oder mehrere Schnittstelle(n) (32), die dazu ausgelegt ist/sind, mit dem Benutzergerät (210) und der fahrzeuginternen Infotainment-Vorrichtung (220) zu kommunizieren; und
eine Verarbeitungsschaltungsanordnung (34), die dazu ausgelegt ist, die eine oder die mehreren Schnittstelle(n) (32) zu steuern und: eine Position des Benutzergeräts (210) zu erhalten;
eine nächste fahrzeuginterne Infotainment-Vorrichtung der Vielzahl fahrzeuginterner Infotainment-Vorrichtungen (220) in einer Sichtlinie zu dem Benutzergerät (210) zu bestimmen;
Informationen an das Benutzergerät (210) und die nächste fahrzeuginterne Infotainment-Vorrichtung zu übertragen, um es beiden zu ermöglichen, eine Verbindung zueinander herzustellen;
Informationen über eine relative Position des Benutzergeräts (210) relativ zur nächsten fahrzeuginternen Infotainment-Vorrichtung zu erzeugen und
die Informationen über die relative Position an das Benutzergerät (210) zu übertragen, um eine Präsentation von Inhalt auf der Anzeige des Benutzergeräts (210) durch Verwendung der nächsten fahrzeuginternen Infotainment-Vorrichtung zu erweitern.

2. Steuereinheit (30) nach Anspruch 1, wobei die Bestimmung der nächsten fahrzeuginternen Infotainment-Vorrichtung auf mindestens einem Kommunikationskanalparameter und/oder Informationen, die von einem Belegungssensor empfangen werden, basiert.

3. Benutzergerät (210) zum Verbessern einer Handhabung einer fahrzeuginternen Infotainment-Vorrichtung (220), das umfasst
eine Anzeige;
eine oder mehrere Schnittstelle(n), die dazu ausgelegt ist/sind, mit einer nächsten fahrzeuginternen Infotainment-Vorrichtung einer Vielzahl von Kommunikationsvorrichtungen in einer Sichtlinie und einer Steuereinheit zu kommunizieren; und
eine Verarbeitungsschaltungsanordnung, die ausgelegt ist zum:
Empfangen von Informationen über die nächste fahrzeuginterne Infotainment-Vorrichtung;
Erhalten von Informationen über eine relative Position des Benutzergeräts (210) relativ zur nächsten fahrzeuginternen Infotainment-Vorrichtung und
Erweitern einer Präsentation von Inhalt auf der Anzeige des Benutzergeräts (210) durch Verwendung der nächsten fahrzeuginternen Infotainment-Vorrichtung in Abhängigkeit von den erhaltenen Informationen.

4. Benutzergerät (210) nach Anspruch 3, wobei
die Informationen über die relative Position periodisch erhalten werden und
das Erweitern der Anzeige periodisch in Abhängigkeit von den periodisch erhaltenen Informationen erfolgt.

5. Infotainment-System, das umfasst
eine Steuereinheit (30) nach einem der Ansprüche 1 bis 2 und
mindestens eine fahrzeuginterne Infotainment-Vorrichtung (220), wobei die fahrzeuginterne Infotainment-Vorrichtung (220) mindestens einen Sensor zum Bestimmen einer Bewegung der mindestens einen fahrzeuginternen Infotainment-Vorrichtung (220) umfasst; und
wobei die Steuereinheit (30) ferner ausgelegt ist zum:
Empfangen von Bewegungsdaten von dem Benutzergerät (210) und Bewegungsdaten von der mindestens einen fahrzeuginternen Infotainment-Vorrichtung (220);
Vergleichen der Bewegungsdaten von dem Benutzergerät (210) und von der mindestens einen fahrzeuginternen Infotainment-Vorrichtung (220) und
wenn die Bewegungsdaten des Benutzergeräts (210) und der fahrzeuginternen Infotainment-Vorrichtung (220) übereinstimmen, Herstellen einer Verbindung zwischen dem Benutzergerät (210) und der mindestens einen fahrzeuginternen Infotainment-Vorrichtung (220).

6. Infotainment-System nach Anspruch 6, wobei
das Vergleichen der Bewegungsdaten durch Überprüfen der Bewegungsdaten auf ein Auslöserereignis erfolgt.

7. Fahrzeug, das umfasst
eine Steuereinheit (30) nach einem der Ansprüche 1 bis 2 und/oder
ein Infotainment-System nach Anspruch 5 oder 6 und einen Belegungssensor, wobei
die Steuereinheit (30) ferner ausgelegt ist, um eine nächste fahrzeuginterne Infotainment-Vorrichtung in einer Sichtlinie zu einem Benutzer des Benutzergeräts (210) basierend auf vom Belegungssensor empfangenen Informationen zu bestimmen.

8. Verfahren (100) zum Verbessern eines Bluetooth-Verbindungsprozesses, das umfasst:
Bestimmen (110) einer Position des Benutzergeräts (210);
Bestimmen (120) einer nächsten fahrzeuginternen Infotainment-Vorrichtung einer Vielzahl fahrzeuginterner Infotainment-Vorrichtungen (220) in einer Sichtlinie zu dem Benutzergerät (210);
Übertragen (130) von Informationen an das Benutzergerät (210) und die nächste fahrzeuginterne Infotainment-Vorrichtung, um es beiden zu ermöglichen, eine Verbindung zueinander herzustellen;
Erzeugen von Informationen über eine relative Position des Benutzergeräts (210) relativ zur nächsten fahrzeuginternen Infotainment-Vorrichtung und
Übertragen der Informationen über die relative Position an das Benutzergerät (210) und/oder die nächste fahrzeuginterne Infotainment-Vorrichtung, um eine Präsentation von Inhalt auf der Anzeige des Benutzergeräts (210) durch Verwendung der nächsten fahrzeuginternen Infotainment-Vorrichtung zu erweitern.

9. Computerprogramm mit einem Programmcode zum Durchführen des Verfahrens nach Anspruch 8, wenn das Computerprogramm auf einem Computer, einem Prozessor oder einer programmierbaren Hardwarekomponente ausgeführt wird.

## Revendications

1. Unité de commande (30) pour améliorer un processus de connexion Bluetooth entre un équipement utilisateur (210) et un dispositif d'infodivertissement à bord de véhicule (220) parmi une pluralité de dispositifs d'infodivertissement à bord de véhicule (220), comprenant :
une ou plusieurs interfaces (32) configurées pour communiquer avec l'équipement utilisateur (210) et le dispositif d'infodivertissement à bord de véhicule (220) ; et
une circuiterie de traitement (34) configurée pour commander l'une ou les plusieurs interfaces (32) et pour : obtenir une position de l'équipement utilisateur (210) ;
déterminer un dispositif d'infodivertissement à bord de véhicule le plus près, parmi la pluralité de dispositifs d'infodivertissement à bord de véhicule (220), dans une ligne de visée, par rapport à l'équipement utilisateur (210) ;
transmettre des informations à l'équipement utilisateur (210) et au dispositif d'infodivertissement à bord de véhicule le plus près pour permettre aux deux d'établir une connexion l'un avec l'autre ;
générer des informations concernant une position relative de l'équipement utilisateur (210) relativement au dispositif d'infodivertissement à bord de véhicule le plus près ; et
transmettre les informations concernant la position relative à l'équipement utilisateur (210) pour amplifier une présentation de contenu sur l'écran d'affichage de l'équipement utilisateur (210) en utilisant le dispositif d'infodivertissement à bord de véhicule le plus près.

2. Unité de commande (30) selon la revendication 1, dans laquelle
la détermination du dispositif d'infodivertissement à bord de véhicule le plus près est basée sur au moins un paramètre de canal de communication et/ou des informations reçues en provenance d'un capteur d'occupation.

3. Équipement utilisateur (210), pour améliorer une manipulation d'un dispositif d'infodivertissement à bord de véhicule (220), comprenant
un écran d'affichage ;
une ou plusieurs interfaces configurées pour communiquer avec un dispositif d'infodivertissement à bord de véhicule le plus près parmi une pluralité de dispositifs de communication dans une ligne de visée et une unité de commande ; et
une circuiterie de traitement configurée pour :
recevoir des informations concernant le dispositif d'infodivertissement à bord de véhicule le plus près ;
obtenir des informations concernant une position relative de l'équipement utilisateur (210) relativement au dispositif d'infodivertissement à bord de véhicule le plus près ; et
amplifier une présentation de contenu sur l'écran d'affichage de l'équipement utilisateur (210) en utilisant le dispositif d'infodivertissement à bord de véhicule le plus près en fonction des informations obtenues.

4. Équipement utilisateur (210) selon la revendication 3, dans lequel
les informations concernant la position relative sont obtenues périodiquement ; et
l'amplification de l'écran d'affichage est effectuée périodiquement en fonction des informations obtenues périodiquement.

5. Système d'infodivertissement, comprenant
une unité de commande (30) selon de quelconques des revendications 1 et 2 ; et
au moins un dispositif d'infodivertissement à bord de véhicule (220), dans lequel le dispositif d'infodivertissement à bord de véhicule (220) comprend au moins un capteur pour déterminer un mouvement de l'au moins un dispositif d'infodivertissement à bord de véhicule (220) ; et
dans lequel l'unité de commande (30) est en outre configurée pour :
recevoir des données de mouvement en provenance de l'équipement utilisateur (210) et des données de mouvement en provenance de l'au moins un dispositif d'infodivertissement à bord de véhicule (220) ;
comparer les données de mouvement provenant de l'équipement utilisateur (210) et provenant de l'au moins un dispositif d'infodivertissement à bord de véhicule (220) ; et
si les données de mouvement de l'équipement utilisateur (210) et du dispositif d'infodivertissement à bord de véhicule (220) correspondent les unes aux autres, établir une connexion entre l'équipement utilisateur (210) et l'au moins un dispositif d'infodivertissement à bord de véhicule (220).

6. Système d'infodivertissement selon la revendication 6, dans lequel
la comparaison des données de mouvement est effectuée en contrôlant les données de mouvement en ce qui concerne un événement de déclenchement.

7. Véhicule, comprenant
une unité de commande (30) selon de quelconques des revendications 1 et 2 ; et/ou
un système d'infodivertissement selon la revendication 5 ou 6 ; et
un capteur d'occupation, dans lequel
l'unité de commande (30) est en outre configurée pour déterminer un dispositif d'infodivertissement à bord de véhicule le plus près dans une ligne de visée par rapport à un utilisateur de l'équipement utilisateur (210) sur la base d'informations reçues en provenance du capteur d'occupation.

8. Procédé (100) pour améliorer un processus de connexion Bluetooth, comprenant :
la détermination (110) d'une position de l'équipement utilisateur (210) ;
la détermination (120) d'un dispositif d'infodivertissement à bord de véhicule le plus près parmi une pluralité de dispositifs d'infodivertissement à bord de véhicule (220) dans une ligne de visée par rapport à l'équipement utilisateur (210) ;
la transmission (130) d'informations à l'équipement utilisateur (210) et au dispositif d'infodivertissement à bord de véhicule le plus près pour permettre aux deux d'établir une connexion l'un avec l'autre ;
la génération d'informations concernant une position relative de l'équipement utilisateur (210) relativement au dispositif d'infodivertissement à bord de véhicule le plus près ; et
la transmission des informations concernant la position relative à l'équipement utilisateur (210) et/ou au dispositif d'infodivertissement à bord de véhicule le plus près pour amplifier une présentation de contenu sur l'écran d'affichage de l'équipement utilisateur (210) en utilisant le dispositif d'infodivertissement à bord de véhicule le plus près.

9. Programme d'ordinateur, ayant un code de programme pour réaliser le procédé selon la revendication 8, lorsque le programme d'ordinateur est exécuté sur un ordinateur, un processeur, ou un composant matériel programmable.
